# EUROPÄISCHE PATENTSCHRIFT

(11) **EP 1 907 111 B1**
(45) Veröffentlichungstag und Bekanntmachung des Hinweises auf die Patenterteilung: **29.02.2012**
(21) Anmeldenummer: 06792556.0
(22) Anmeldetag: 24.07.2006
(51) Int. Cl.: B01J 19/00, B01L 3/00

(54) **MIKROFLUIDIKSYSTEM**
MICROFLUID SYSTEM
SYSTEME MICROFLUIDIQUE

(30) Priorität: 25.07.2005 DE 102005034642
(43) Veröffentlichungstag der Anmeldung: 09.04.2008
(73) Patentinhaber: SIEMENS AKTIENGESELLSCHAFT, 80333 München (DE)
(72) Erfinder: LOHF, Astrid, 91056 Erlangen (DE); WENZEL, Waldemar, 90766 Fürth (DE)
(86) Internationale Anmeldenummer: PCT/EP2006/064590
(87) Internationale Veröffentlichungsnummer: WO 2007/012632

(56) Entgegenhaltungen:
- EP-A2- 1 232 785
- WO-A-2004/091773
- US-A1- 2004 148 858

## Beschreibung

Die Erfindung betrifft ein Mikrofluidiksystem mit einer Mikrokanalstruktur zum Führen von Fluiden und mit einer von der Mikrokanalstruktur durch mindestens eine Trennwand getrennten weiteren Kanalstruktur zum Führen eines Wärmeübertragungsfluids.

Ein derartiges, aus der EP 1 217 099 A2 bekanntes Mikrofluidiksystem bildet einen Mikroreaktor, bei dem die Mikrokanalstruktur für die zu mischenden Fluide (Edukte) und das Reaktionsprodukt in einer ersten Platte und die weitere Kanalstruktur für das Wärmeübertragungsfluid in einer weiteren Platte ausgebildet sind. Beide Platten sind unter Zwischenlage einer dritten Platte zusammengefügt, welche eine Trennwand zwischen der Mikrokanalstruktur und der weiteren Kanalstruktur bildet. Das Wärmeübertragungsfluid wird extern temperiert, das heißt beheizt oder gekühlt.

Ein weiteres derartiges System ist aus US 2004/014885 A bekannt.

Um eine gute Wärmeübertragung sicherzustellen, muss die Trennwand zwischen der Produktseite und der Wärmeübertragerseite möglichst dünn ausgebildet sein. Bei chemischen Reaktionen, insbesondere bei hohen Reaktionstemperaturen, kommt es häufig zu Korrosionen an den Innenwänden der Mikrokanalstruktur. Dabei können Leckagen nach außen hin durch das Austreten von Chemikalien erkannt werden. Da Reaktionen in der Regel in Abzügen mit Zwangsbelüftung durchgeführt werden, ist die Gefahr für den Bediener relativ gering. Treten dagegen Leckagen zwischen der Wärmeübertragerseite und der Produktseite auf und kommt es dabei zum Übertritt von Chemikalien in den Wärmeübertragerkreislauf, so werden die Chemikalien unter Umständen in dem Thermostaten außerhalb des Abzugs verdampft, wodurch der Bediener den Dämpfen toxischer Stoffe ausgesetzt werden kann. Außerdem kann es dabei zu Störungen der Wärmeübertragung bzw. der chemischen Reaktion kommen, wenn Chemikalien in den Wärmeübertragerkreislauf bzw. das Wärmeübertragungsfluid in die Mikrokanalstruktur des Mikroreaktors gelangen.

Der Erfindung liegt daher die Aufgabe zugrunde, die Gefahr interner Leckagen in einem temperierten Mikrofluidiksystem rechtzeitig zu erkennen.

Gemäß der Erfindung wird die Aufgabe dadurch gelöst, dass bei dem Mikrofluidiksystem der eingangs angegebenen Art die Mikrokanalstruktur an mindestens einer Stelle durch eine weitere Trennwand von einem Hohlraum getrennt ist, dass die weitere Trennwand eine Sollbruchstelle enthält indem sie zumindest bereichsweise schwächer als die Trennwand zwischen der Mikrokanalstruktur und der weiteren Kanalstruktur ausgebildet ist, und dass der Hohlraum mit einer Detektoreinrichtung zum Detektieren von aus der Mikrostruktur (2) in den Holhraum (12) eindringenden Fluiden verbunden ist.

Die weitere Trennwand bildet somit eine Sollbruchstelle, die bei Korrosion in der Mikrokanalstruktur zuerst zerstört wird. In diesem Fall strömt das Fluid aus der Mikrokanalstruktur in den Hohlraum, wo es mittels der Detektoreinrichtung detektiert wird. Als Ergebnis der Detektion kann ein Warnsignal erzeugt und/oder der laufende Reaktionsprozess automatisch abgeschaltet werden.

Zur Detektion des in den Hohlraum eindringenden Fluids kommt eine Vielzahl unterschiedlicher Detektionsprinzipien in Frage. Hierzu zählen unter anderem die Thermoanemometrie, bei der ein Hitzdraht durch das eindringende Fluid gekühlt wird, die Messung der sich durch das eindringende Fluid ändernden elektrischen Leitfähigkeit oder Kapazität in dem Hohlraum, optische Messmethoden, wie Trübungsmessung, Ultraschall zur Detektion von Änderungen der Schallausbreitung in dem Hohlraum aufgrund des eindringenden Fluids usw.

Vorzugsweise kommt ein einfaches und damit kostengünstiges Detektionsprinzip zur Anwendung, wie zum Bespiel Thermoanemometrie, Leitfähigkeits- oder Kapazitätsmessung, so dass die Detektoreinrichtung direkt in dem Hohlraum angeordnet werden kann. Da Mikrofluidiksysteme im Fehlerfall nicht repariert werden können, sollte auch die Detektoreinrichtung ein kostengünstiges Wegwerfteil sein.

Alternativ kann der Hohlraum als Kanal ausgebildet sein, an dem die dann vorzugsweise außerhalb des eigentlichen Mikrofluidiksystems, beispielsweise in einer druckdichten Kapselung oder in einer Schicht eines das Mikrofluidiksystem enthaltenden Mehrschichtenaufbaus, angeordnete Detektoreinrichtung angeschlossen ist.

Die als Sollbruchstelle dienende weitere Trennwand kann auf unterschiedliche Weise schwächer als die Trennwand zwischen der Mikrokanalstruktur und der weiteren Kanalstruktur ausgebildet sein. Vorzugsweise ist die weitere Trennwand dünner als die Trennwand zwischen der Mikrokanalstruktur und der weiteren Kanalstruktur ausgebildet. Alternativ oder ergänzend kann sie durch chemische Vorbehandlung oder durch Strahlenbehandlung geschwächt werden.

Da Mikrofluidiksysteme in der Regel bestimmten Anforderungen an die Druckfestigkeit genügen müssen, ist die minimal zulässige Wandstärke der Trennwand zwischen der Mikrokanalstruktur und der weiteren Kanalstruktur nach unten hin begrenzt, wobei die Wandstärke umso geringer sein kann, je geringer die Kanalweiten beiderseits der Trennwand sind. Vorzugsweise ist daher die Weite des Hohlraumes auf der einen Seite der weiteren Trennwand geringer als die Kanalweite der Mikrokanalstruktur auf der anderen Seite, so dass die Wandstärke der weiteren Trennwand reduziert werden kann, ohne dass die Gefahr besteht, dass sie bei einer Druckprüfung durch den Prüfdruck zerstört wird.

Um die Sicherheit und Zuverlässigkeit bei der Detektion einer Gefährdung des Mikrofluidiksystems durch Korrosion zu erhöhen oder mehrere kritische Stellen überwachen zu können, kann an mindestens einer weiteren Stelle der Mikrokanalstruktur eine redundante Anordnung von weiterer Trennwand, Hohlraum und Detektoreinrichtung vorgesehen sein. Dabei können die Schwächungen der weiteren Trennwände zwischen der Mikrokanalstruktur und den verschiedenen Hohlräumen gleich oder unterschiedlich sein. Kommt es an einer ersten von zwei oder mehreren Sollbruchstellen zu einem Eindringen des Fluids in den jeweils dahinter liegenden Hohlraum, so wird zunächst ein Alarm bzw. Voralarm erzeugt, während beim Brechen der zweiten oder weiterer Sollbruchstellen gegebenenfalls weitere höherstufige Alarme erzeugt werden oder der Reaktionsprozess in dem Mikrofluidiksystem automatisch abgeschaltet wird und gegebenenfalls weitere Sicherheitsmaßnahmen, wie zum Beispiel ein Spülvorgang, eingeleitet werden.

Die Erfindung kommt vorzugsweise bei solchen Mikrofluidiksystemen zur Anwendung, die aufgrund besonderer Umstände, wie hoher Temperatur, Stoffumwandlung usw., einer erhöhten Korrosion ausgesetzt sind. Demnach handelt es sich bei dem erfindungsgemäßen Mikrofluidiksystem vorzugsweise um einen Mikroreaktor, -mischer und/oder -verweiler.

Zur weiteren Erläuterung der Erfindung wird im Folgenden auf die Figuren der Zeichnung Bezug genommen; im Einzelnen zeigen:
- Figur 1: ein schematisches Ausführungsbeispiel des erfindungsgemäßen Mikrofluidiksystems und
- Figur 2: ein weiteres Ausführungsbeispiel des erfindungsgemäßen Mikrofluidiksystems im Querschnitt.

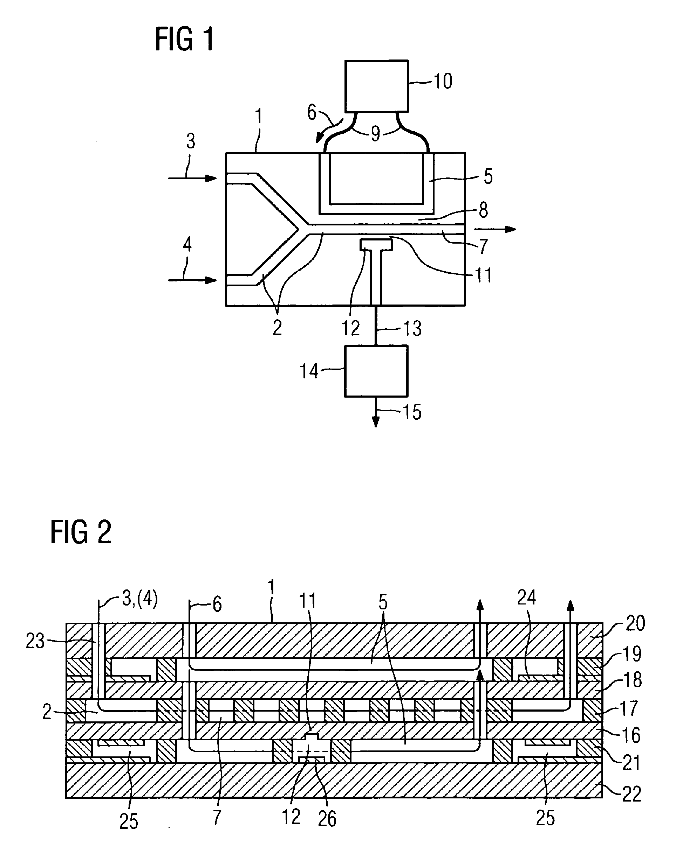

Figur 1 zeigt ein Mikrofluidiksystem in Form eines Mikroreaktors mit einem ein- oder mehrteiligen Träger (Substrat) 1, in dem eine Mikrokanalstruktur 2 zur Führung und Mischung von Fluiden 3 und 4 ausgebildet ist. Der Träger 1 enthält ferner eine weitere Kanalstruktur 5, in der ein Wärmeübertragungsfluid 6 fließt. Im Bereich der Mischstrecke 7 der Mikrokanalstruktur 2 ist diese durch eine dünne Trennwand 8 mit einer Dicke von nur wenigen Zehntelmillimetern von der weiteren Kanalstruktur 5 getrennt. Die weitere Kanalstruktur 5 ist über Fluidverbindungen 9, wie Schlauchverbindungen oder Fluidkanäle, an einem Thermostaten 10 angeschlossen, in dem das Wärmeübertragungsfluid 6 temperiert, im Falle von exothermen Reaktionen der Fluide 3 und 4 gekühlt, wird.

An einer Stelle im Bereich der Mischstrecke 7 ist die Mikrokanalstruktur 2 durch eine weitere Trennwand 11 von einem ebenfalls in dem Träger 1 ausgebildeten Hohlraum 12 getrennt. Der Hohlraum 12 ist hier kanalförmig ausgebildet und über eine weitere Fluidverbindung 13 an einer Detektoreinrichtung 14 angeschlossen, die dazu ausgebildet ist, in den Hohlraum 12 eindringende Fluide zu detektieren. Die hierzu in Frage kommenden Detektionsverfahren sind allgemein bekannt und werden daher nicht weiter erläutert. Im Detektionsfall erzeugt die Detektoreinrichtung 14 ein Ausgangssignal 15, welches zur Alarmerzeugung oder zur Einleitung weiterer Maßnahmen, wie zum Beispiel das Abschalten des Reaktionsprozesses, herangezogen werden kann. Die weitere Trennwand 11 ist im Vergleich zu der Trennwand 8 schwächer, hier dünner, ausgebildet, so dass es im Falle von Korrosionen innerhalb der Mikrokanalstruktur 2 zuerst zu einer Zerstörung der weiteren Trennwand 11 kommt, bevor die Trennwand 8 zerstört wird und Fluide aus Mikrokanalstruktur 2 in die weitere Kanalstruktur 5 oder umgekehrt aus der weiteren Kanalstruktur 5 in die Mikrokanalstruktur 2 eindringen können.

Figur 2 zeigt den Mikroreaktor in Form eines Moduls für ein Mikrofluidiksystem. Auf einer Grundplatte 16 des mehrteiligen Trägers 1 ist eine die Mikrokanalstruktur 2 enthaltende strukturierte Schicht 17 aufgebracht. Alternativ kann die Mikrokanalstruktur 2 durch ein geeignetes Verfahren der Mikrotechnik auch einseitig in einer einzigen Platte eingebracht werden. Die nach oben offenen Mikrokanalstruktur 2 ist mit einer dünnen Platte 18 abgedeckt, die als Grundplatte für eine weitere strukturierte Schicht 19 dient, die einen Teil der weiteren Kanalstruktur 5 enthält. Die Schicht 19 ist nach oben mit einer weiteren Platte 20 abgedeckt. Der restliche Teil der weiteren Kanalstruktur 5 ist in einer zusätzlichen strukturierten Schicht 21 auf einer zusätzlichen Grundplatte 22 ausgebildet, die beide von unten her an der Grundplatte 16 anliegen. Zur Zuführung bzw. Abführung der Fluide 3, 4 und des Wärmeübertragungsfluids 6 sowie zur Verbindung der beiden Teile der Kanalstruktur 5 dienen Fluidkanäle 23, die senkrecht zur Grundfläche der Platten und Strukturen 16 bis 22 verlaufen und diese entsprechend durchqueren. Die Platten 16, 18 und 22 tragen teilweise elektrische Strukturen, die je nach Ausbildung Temperatursensoren 24 oder kapazitive Drucksensoren 25 darstellen und zur Messung von Temperatur und Druck der Fluide in der Mikrokanalstruktur 2 dienen.

Im Bereich der Mischstrecke 7 ist zwischen den Platten 16 und 22 ein Hohlraum 12 ausgebildet, in dem eine elektrische Struktur 26 zur Detektion eines in den Hohlraum 12 eindringenden Fluids angeordnet ist. Diese elektrische Struktur 26 kann beispielsweise aus zwei voneinander beabstandeten Elektroden bestehen, zwischen denen die elektrische Leitfähigkeit oder Kapazität gemessen wird. Es kann sich aber auch beispielsweise um einen Schallwandler handeln, der die Schallausbreitung der von ihm aus gesandten Schallwellen misst, oder um einen Trübungssensor in Form einer Lichtschranke. Die elektrische Struktur 26 bildet zusammen mit einer hier nicht gezeigten nachgeordneten Auswerteeinrichtung die Detektoreinrichtung 14. Die Platte 16 ist im Bereich des Hohlraums 12 dickenreduziert und bildet dort die Sollbruchstelle der weiteren Trennwand 11. Dabei ist die Weite des Hohlraumes 12 auf der einen Seite der weiteren Trennwand 11 geringer als die Kanalweite der Mikrokanalstruktur 2 auf der anderen Seite, so dass trotz der Dickenreduzierung der weiteren Trennwand 11 nicht die Gefahr besteht, dass sie bei einer Druckprüfung durch den Prüfdruck zerstört wird.

## Patentansprüche

1. Mikrofluidiksystem mit einer Mikrokanalstruktur (2) zum Führen von Fluiden (3, 4) und mit einer von der Mikrokanalstruktur (2) durch mindestens eine Trennwand (8) getrennten weiteren Kanalstruktur (5) zum Führen eines Wärmeübertragungsfluids (6), **dadurch gekennzeichnet, dass** die Mikrokanalstruktur (2) an mindestens einer Stelle durch eine weitere Trennwand (11) von einem Hohlraum (12) getrennt ist, dass die weitere Trennwand (11) eine Sollbruchstelle enthält, indem sie zumindest bereichsweise schwächer als die Trennwand (8) zwischen der Mikrokanalstruktur (2) und der weiteren Kanalstruktur (5) ausgebildet ist, und dass der Hohlraum (12) mit einer Detektoreinrichtung (14) zur Detektion von aus der Mikrokanalstruktur (2) in den Hohlraum (12) eindringenden Fluiden verbunden ist.

2. Mikrofluidiksystem nach Anspruch 1, **dadurch gekennzeichnet, dass** die Detektoreinrichtung (14) in dem Hohlraum (12) angeordnet ist.

3. Mikrofluidiksystem nach Anspruch 1, **dadurch gekennzeichnet, dass** der Hohlraum (12) als Kanal ausgebildet ist, der zu der Detektoreinrichtung (14) führt.

4. Mikrofluidiksystem nach einem der vorangehenden Ansprüche, **dadurch gekennzeichnet, dass** die weitere Trennwand (11) dünner als die Trennwand (8) zwischen der Mikrokanalstruktur (2) und der weiteren Kanalstruktur (5) ausgebildet ist.

5. Mikrofluidiksystem nach einem der vorangehenden Ansprüche, **dadurch gekennzeichnet, dass** die weitere Trennwand (11) durch chemische Vorbehandlung und/oder Strahlungsbehandlung geschwächt ist.

6. Mikrofluidiksystem nach einem der vorangehenden Ansprüche, **dadurch gekennzeichnet, dass** die Weite des Hohlraumes (12) auf der einen Seite der weiteren Trennwand (11) geringer als die Kanalweite der Mikrokanalstruktur (2) auf der anderen Seite der weiteren Trennwand (11) ist.

7. Mikrofluidiksystem nach einem der vorangehenden Ansprüche, **dadurch gekennzeichnet, dass** an mindestens einer weiteren Stelle der Mikrokanalstruktur (2) eine redundante Anordnung von weiterer Trennwand, Hohlraum und Detektoreinrichtung vorgesehen ist.

8. Mikrofluidiksystem nach einem der vorangehenden Ansprüche, **dadurch gekennzeichnet, dass** an mindestens einer weiteren Stelle der Mikrokanalstruktur (2) eine ergänzende Anordnung von weiterer Trennwand, Hohlraum und Detektoreinrichtung vorgesehen ist, wobei die Schwächungen der weiteren Trennwände unterschiedlich sind.

9. Mikrofluidiksystem nach einem der vorangehenden Ansprüche, **dadurch gekennzeichnet, dass** es als Mikroreaktor, -mischer und/oder -verweiler ausgebildet ist.

## Claims

1. Microfluidic system with a microchannel structure (2) for conveying fluids (3, 4) and with a further channel structure (5) separated from the microchannel structure (2) by at least one partition wall (8) for conveying a thermal transfer fluid (6), **characterised in that** the microchannel structure (2) is separated from the cavity (12) by a further partition wall (11) at least at one point, that the further partition wall (11) contains a predetermined breaking point, **in that** it is embodied weaker at least in some areas than the partition wall (8) between the microchannel structure (2) and the further channel structure (5), and that the cavity (12) is connected to a detector device (14) for detection of fluids penetrating from the microchannel structure (2) into the cavity (12).

2. Microfluidic system according to claim 1, **characterised in that** the detector device (14) is arranged in the cavity (12).

3. Microfluidic system according to claim 1, **characterised in that** the cavity (12) is embodied as a channel which leads to the detector device (14).

4. Microfluidic system according to one of the preceding claims, **characterised in that** the further partition wall (11) is embodied thinner than the partition wall (8) between the microchannel structure (2) and the further channel structure (5) .

5. Microfluidic system according to one of the preceding claims, **characterised in that** the further partition wall (11) is weakened by chemical pre-treatment and/or radiation treatment.

6. Microfluidic system according to one of the preceding claims, **characterised in that** the width of the cavity (12) on the one side of the further partition wall (11) is less than the channel width of the microchannel structure (2) on the other side of the further partition wall (11).

7. Microfluidic system according to one of the preceding claims, **characterised in that** a redundant arrangement of further partition wall, cavity and detector device is provided at least at one further point of the microchannel structure (2).

8. Microfluidic system according to one of the preceding claims, **characterised in that** a supplementary arrangement of further partition wall, cavity and detector device is provided at least at one further point of the microchannel structure (2), with the weakened areas of the further partition walls being different.

9. Microfluidic system according to one of the preceding claims, **characterised in that** it is embodied as a microreactor, mixer and/or detention vessel.

## Revendications

1. Système microfluidique, comprenant une structure ( 2 ) de microcanal, pour la conduite de fluides ( 3, 4 ) et comprenant une autre structure ( 5 ) de canal, séparée de la structure ( 2 ) de microcanal par au moins une cloison ( 8 ), pour la conduite d'un fluide ( 6 ) caloporteur, **caractérisé en ce que** la structure ( 2 ) de microcanal est séparée d'une cavité ( 12 ) en au moins un point par une autre cloison ( 11 ), **en ce que** l'autre cloison ( 11 ) comporte un point destiné à se rompre, par le fait qu'au moins par endroits elle est plus faible que la cloison ( 8 ) entre la structure ( 2 ) de microcanal et l'autre structure ( 5 ) de canal, et **en ce que** la cavité ( 12 ) est reliée à un dispositif ( 14 ) formant détecteur, pour la détection de fluides pénétrant à partir de la structure ( 2 ) de microcanal dans la cavité ( 12 ).

2. Système microfluidique suivant la revendication 1, **caractérisé en ce que** le dispositif ( 14 ) formant détecteur est placé dans la cavité ( 12 ).

3. Système microfluidique suivant la revendication 1, **caractérisé en ce que** la cavité ( 12 ) est constituée en canal, qui mène au dispositif ( 14 ) formant détecteur.

4. Système microfluidique suivant l'une des revendications précédentes, **caractérisé en ce que** l'autre cloison ( 11 ) est plus mince que la cloison ( 8 ) entre la structure ( 2 ) de microcanal et l'autre structure ( 5 ) de canal.

5. Système microfluidique suivant l'une des revendications précédentes, **caractérisé en ce que** l'autre cloison ( 11 ) est affaiblie par un traitement chimique préalable et/ou par un traitement par rayonnement.

6. Système microfluidique suivant l'une des revendications précédentes, **caractérisé en ce que** la largeur de la cavité ( 12 ) d'un côté de l'autre cloison ( 11 ) est plus petite que la largeur de canal de la structure ( 2 ) de microcanal de l'autre côté de l'autre cloison ( 11 ).

7. Système microfluidique suivant l'une des revendications précédentes, **caractérisé en ce qu'**il est prévu un agencement redondant d'autre cloison, de cavité et de dispositif formant détecteur en au moins un autre point de la structure ( 2 ) de microcanal.

8. Système microfluidique suivant l'une des revendications précédentes, **caractérisé en ce qu'**il est prévu un agencement complémentaire d'autre cloison, de cavité et de dispositif formant détecteur en au moins un autre point de la structure ( 2 ) de microcanal, les affaiblissements des autres cloisons étant différents.

9. Système microfluidique suivant l'une des revendications précédentes, **caractérisé en ce qu'**il est constitué en microréacteur, en micromélangeur et/ou en dispositif de séjour.
